# EUROPÄISCHE PATENTSCHRIFT

(11) **EP 3 205 005 B1**
(45) Veröffentlichungstag und Bekanntmachung des Hinweises auf die Patenterteilung: **06.03.2024**
(21) Anmeldenummer: 15783973.9
(22) Anmeldetag: 06.10.2015
(51) Int. Cl.: H02K 55/02, H01F 6/04

(54) **ELEKTRISCHE MASCHINE**
ELECTRICAL MACHINE
MACHINE ÉLECTRIQUE

(30) Priorität: 06.10.2014 DE 102014114451
(43) Veröffentlichungstag der Anmeldung: 16.08.2017
(73) Patentinhaber: Oswald Elektromotoren Gmbh, 63897 Miltenberg (DE)
(72) Erfinder: DE WAELE, Alphons Theophile Augusta Maria, 5501 BH Veldhoven (NL); OSWALD, Johannes, 63897 Miltenberg (DE); REIS, Thomas, 63924 Kleinheubach (DE)
(74) Vertreter: Habermann Intellectual Property Partnerschaft von Patentanwälten mbB
(86) Internationale Anmeldenummer: PCT/EP2015/073069
(87) Internationale Veröffentlichungsnummer: WO 2016/055491

(56) Entgegenhaltungen:
- EP-A1- 0 805 545
- WO-A1-2009/050028
- DE-A1- 10 348 214
- US-A1- 2013 285 487
- US-B1- 6 313 556
- LIYI LI ET AL: "Design of the HTS Permanent Magnet Motor With Superconducting Armature Winding", IEEE TRANSACTIONS ON APPLIED SUPERCONDUCTIVITY, IEEE SERVICE CENTER, LOS ALAMITOS, CA, US, Bd. 22, Nr. 3, 1. Juni 2012 (2012-06-01), Seite 5200704, XP011473513, ISSN: 1051-8223, DOI: 10.1109/TASC.2011.2181293
- ZHU ZHE ET AL: "Conceptual Design of the Cryostat for a Direct-Drive Superconducting Wind Generator", IEEE TRANSACTIONS ON APPLIED SUPERCONDUCTIVITY, IEEE SERVICE CENTER, LOS ALAMITOS, CA, US, Bd. 24, Nr. 3, 1. Juni 2014 (2014-06-01), Seiten 1-4, XP011533074, ISSN: 1051-8223, DOI: 10.1109/TASC.2013.2290328 [gefunden am 2013-12-04]

## Beschreibung

Die Erfindung betrifft eine elektrische Maschine mit einem Stator, mit einem Rotor und mit mehreren Maschinenspulen, wobei die elektrische Maschine eine Kühleinrichtung aufweist, die dazu geeignet ist, ein supraleitendes Material mindestens bis unter eine Sprungtemperatur abzukühlen, wobei eine Wicklung mindestens einer Maschinenspule aus dem supraleitenden Material besteht und wobei die Wicklung mit der Kühleinrichtung in Wirkverbindung steht, wobei die Kühleinrichtung ein Kühlrohr aufweist, wobei das Kühlrohr mindestens abschnittsweise an der Wicklung anliegt und wobei die zu kühlende Wicklung und das Kühlrohr innerhalb eines thermischen Isolators angeordnet sind.

Solche elektrischen Maschinen, bei denen der Rotor relativ zu einem feststehenden Stator eine Drehbewegung ausführt, werden in unterschiedlichsten Ausführungsformen in einer Vielzahl von Anwendungsgebieten sowohl als Motoren als auch als Generatoren eingesetzt. Beispielsweise können die elektrischen Maschinen mit Drehstrom betrieben und als Asynchron- oder Synchronmaschine ausgeführt sein.

In Abhängigkeit von der vorgesehenen Leistung der elektrischen Maschine kann die elektrische Maschine notwendigerweise ein erhebliches Gewicht und Volumen aufweisen, wodurch die Herstellung und Montage der elektrischen Maschine erschwert wird. Einschränkungen im Bauraum oder Begrenzungen im Gewicht können dann dazu führen, dass die herkömmliche elektrische Maschine als Antrieb ungeeignet ist.

Für einige Anwendungen werden zudem elektrische Maschinen mit sehr kurzen Anregelzeiten bzw. einem schnellen, dynamischen Betriebsverhalten benötigt. Beispielsweise werden solche elektrischen Maschinen als Belastungseinrichtungen für hochdynamische Motorenprüfstände eingesetzt. Herkömmliche elektrische Maschinen können die steigenden Anforderungen in diesem Bereich häufig nicht oder nur unzureichend erfüllen.

Daher wurden elektrische Maschinen entwickelt, die Maschinenspulen aus supraleitenden Materialien aufweisen. Supraleitende Materialien sind Materialien, deren elektrischer Widerstand bei Unterschreiten einer materialspezifischen Sprungtemperatur sprunghaft auf Null abfällt. Werden die bis unter die Sprungtemperatur abgekühlten Wicklungen der Maschinenspulen beispielsweise mit einem Wechselstrom beaufschlagt, tritt nur ein geringer Energieverlust ein, der gegenüber einem Ohm'schen Widerstand nur sehr gering ist. Dadurch können auch mit vergleichsweise kleinen Maschinen starke elektromagnetische Felder erzeugt werden, wodurch die Leistungsdichte der elektrischen Maschinen erheblich steigt und eine hohe Dynamik ermöglicht wird.

Die elektrische Maschine mit einer supraleitenden Wicklung kann beispielsweise mit einem dreiphasigen Wechselstrom betrieben werden. Es ist aber auch möglich, die elektrische Maschine mit einem höherphasigen Wechselstrom zu betreiben. Die elektrische Maschine kann dabei sowohl in einem niedrigeren Drehzahlbereich und gleichzeitig hohem Drehmoment als auch in einem sogenannten Feldschwächungsbereich bis zu hohen Geschwindigkeiten bei einer konstanten Leistung betrieben werden.

Als supraleitendes Material kommen beispielsweise Hochtemperatursupraleiter in Frage, deren Sprungtemperatur bereits bei einer Temperatur von minus 140 Grad Celsius erreicht sein kann. Für die Wicklung der Maschinenspulen können supraleitende Materialien beispielsweise in Band- oder Drahtform eingesetzt werden. Als supraleitende Materialien kommen unter anderem die Zusammensetzungen YBCO (YBCO coated conductor), BSCCO, MgB₂ oder Pnictide in Frage, die bei ausreichend tiefen Temperaturen eine außerordentlich hohe Stromdichte aufweisen können.

Die Maschinenspulen können sowohl am oder im Rotor als auch am oder im Stator angeordnet sein. Der Stator kann außerhalb (als Außenläufer) oder innerhalb des Rotors (als Innenläufer) angeordnet sein.

Solche elektrische Maschinen mit supraleitenden Wicklungen werden in der auf die Anmelderin zurückgehenden Druckschrift DE 10 2011 056 008 A1 beschrieben.

Bei den bekannten elektrischen Maschinen mit supraleitenden Wicklungen werden die Wicklungen üblicherweise durch Badkryostaten, bei denen die zu kühlenden Maschinenspulen von einer Kryoflüssigkeit, beispielsweise von flüssigem Stickstoff, umgeben sind, oder durch einen Refrigeratorkryostaten, bei dem die Kühlung durch einen sogenannten Cryo-Cooler erfolgt, gekühlt. Bei den bekannten Kühleinrichtungen ist es erforderlich, dass die im Bereich der Wicklungen angeordneten Komponenten der Kühleinrichtung wie beispielsweise die Badkryostaten aus einem elektrisch nicht-leitendem Material hergestellt sind, um eine Induzierung von Wirbelströmen in den Komponenten zu vermeiden. Die herkömmliche Anschlusstechnik für weitere Komponenten der Kühleinrichtung wie beispielsweise des Wärmetauschers ist hingegen üblicherweise aus Metall ausgeführt. Insbesondere auf Grund der unterschiedlichen Wärmeausdehnungseigenschaften der verwendeten unterschiedlichen Materialien ist es bei den bekannten Maschinen äußerst aufwendig, flüssigkeits- und gasdichte Übergänge bereitzustellen und ein unerwünschtes Austreten der Kryoflüssigkeit zu vermeiden.

In der Druckschrift EP 0 805 545 A1 wird eine elektrische Maschine mit supraleitenden Wicklungen beschrieben. Die Kühlung der supraleitenden Wicklungen erfolgt über eine an den Wicklungen anliegende Kühlleitung.

Als Aufgabe der Erfindung wird es angesehen, die bekannten elektrischen Maschinen so weiterzuentwickeln, dass die erforderliche Kühlung der Maschinenspulen auf einfache und kostengünstige Weise erreicht wird.

Diese Aufgabe wird erfindungsgemäß dadurch gelöst, dass das Kühlrohr quer zu einer Wicklungsrichtung der Wicklung um die Wicklung herum geschlungen angeordnet ist und der Abstand benachbarter Schlingenabschnitte des Kühlrohrs deutlich größer ist als ein Außendurchmesser des Kühlrohrs.

Auf diese Weise kann eine ausreichende Kühlung der Wicklung erreicht werden, wobei das Kühlrohr lediglich bereichsweise an der Wicklung anliegt, sodass die Wirbelstromverluste in dem Kühlrohr vergleichsweise gering sind. Bei dem Kühlrohr handelt es sich um einen rohrförmigen, länglichen Gegenstand mit kleinem Innendurchmesser. Zudem ist das Kühlrohr vorteilhafterweise dünnwandig ausgestaltet.

Bei der Verwendung von Kühlrohren zur Kühlung der Wicklungen wird die Kühlleistung insbesondere durch Konvektion über die Wandungen der Kühlrohre auf die die Kühlrohre vorteilhafterweise durchströmende Kryoflüssigkeit übertragen. Dabei kann zum Wärmeabtransport auch ein Phasenübergang der Kryoflüssigkeit von flüssig zu dampfförmig verwendet werden, sodass lediglich eine geringe Einströmgeschwindigkeit der Kryoflüssigkeit in die Kühlrohre von beispielsweise 1 bis 2 m/s erforderlich ist. Es ist aber auch möglich, dass der Wärmeabtransport ohne Phasenübergang erfolgt, wobei vorteilhafterweise höhere Einströmgeschwindigkeiten von beispielsweise 10 bis 20 m/s verwendet werden.

Es ist nicht erforderlich, dass das Kühlrohr die Wicklung vollständig bedeckt bzw. eine Oberfläche der Wicklung vollständig an dem Kühlrohr anliegt, um die erforderliche Kühlleistung zu erbringen, da in supraleitenden Wicklungen lediglich geringe Wärmeverluste auftreten. Daher kann die Kühlung auch mit vergleichsweise wenig Kryoflüssigkeit erreicht werden, die durch das Kühlrohr befördert werden kann. Sofern größere Wärmeverluste über die Kühleinrichtung abgeführt werden sollen, ist vorgesehen, mehrere Kühlrohre an der Wicklung anzuordnen und parallel zu betreiben. Auf diese Weise kann die von der Kühleinrichtung bereitgestellte Kühlleistung einfach erweitert werden.

Es ist auch möglich, dass an der Wicklung mehrere Kühlrohre anliegen, die jeweils von Kryoflüssigkeit durchströmt werden.

Um die elektrische Maschine besonders einfach und kostengünstig herstellen zu können, ist erfindungsgemäß vorgesehen, dass das Kühlrohr aus einem metallischen Werkstoff hergestellt ist. Bei dem metallischen Werkstoff handelt es sich vorteilhafterweise um Kupfer, Kupfernickel, Neusilber oder Edelstahl. Durch die Verwendung des metallischen Werkstoffs kann das Kühlrohr einfach mit weiteren Komponenten der Kühleinrichtung beispielsweise durch eine Lötverbindung verbunden werden, die auch bei kryogenen Temperaturen eine ausreichende Festigkeit und Dichtheit bieten. Zudem weisen Kühlrohre aus Metall eine ähnliche Wärmeausdehnung wie supraleitende Materialien auf, sodass die Kühlrohre einfach an die Wicklungen angelegt werden können und auch bei Temperaturschwankungen ein für den erforderlichen Wärmetransport ausreichender Kontakt zwischen den Wicklungen und den Kühlrohren erreicht wird. Darüber hinaus leiten die metallischen Materialen Wärme gut, sodass durch metallische Kühlrohre eine gute thermische Anbindung an die Wicklungen erreicht werden kann.

Die Kühlrohre sind ausreichend druckstabil ausgelegt und aus einem Material gefertigt, dass sich zum Transport gängiger Kryoflüssigkeiten bzw. Kältemittel wie beispielsweise Helium, Wasserstoff, Neon, Stickstoff oder dergleichen eignet.

Um in den Kühlrohren auftretende Wirbelstromverluste weitestgehend zu vermeiden, weisen die Kühlrohre einen Außendurchmesser zwischen 0,3mm und 1,5mm auf.

Die Kühlrohre weisen zudem eine Wandstärke von maximal 10% des Außendurchmessers auf. Die Wandstärke liegt vorteilhafterweise zwischen 0,03mm und 0,15mm. Auf diese Weise wird lediglich ein äußerst geringer Wirbelstrom in dem Kühlrohr induziert.

Bei dieser Anordnung können neben den auf Sprungtemperatur abzukühlenden Wicklungen der Maschinenspulen auch die zur magnetischen Flussführung benötigten Elemente, wie beispielsweise innerhalb der Wicklung angeordnete Eisenkerne gekühlt werden. Es ist aber auch möglich, diese Elemente durch alternative Kühlelemente wie beispielsweise durch eine Wasserkühlung oder eine Konvektionskühlung zu kühlen.

Vorteilhafterweise ist vorgesehen, dass das Kühlrohr so ausgestaltet ist und an der Wicklung anliegt, dass ein während des Betriebs der elektrischen Maschine in dem Kühlrohr induzierter Wirbelstrom so niedrig ist, dass die hierdurch entstehenden Wirbelstromverluste geringer sind, als die in den Supraleitern auftretenden Verlustleistungen. Durch optimierte Auswahl des Durchmessers und der Wandstärke des Kühlrohrs können die auftretenden Wirbelstromverluste sehr gering gehalten werden. Auf diese Weise können die auftretenden Wirbelstromverluste sehr gering gehalten werden.

Bei einer besonderen Ausgestaltung der elektrischen Maschine ist vorgesehen, dass der Rotor und dessen Lagereinrichtungen in einem warmen Bereich liegen und nur der Stator mit daran angeordneten Wicklungen der Maschinenspulen gekühlt werden.

Um Kühlleistung auf das Kühlrohr übertragen zu können, ist vorgesehen, dass das Kühlrohr zwei Kühlmittelanschlüsse aufweist, die beispielsweise an den gegenüber liegenden Seiten des Kühlrohrs angeordnet sind. Diese Kühlmittelanschlüsse können beispielsweise mit geeigneten Rohrleitungen oder Schlauchleitungen mit weiteren Komponenten der Kühleinrichtung verbunden sein. Über diese Leitungen kann dann ein geeignetes Kryofluid, beispielsweise flüssiger oder gasförmiger Wasserstoff, Stickstoff, Helium oder Neon in das Kühlrohr geleitet werden.

Um die zur Kühlung benötigte Kühlleistung zu verringern ist vorgesehen, dass die zu kühlende Wicklung und das Kühlrohr innerhalb eines thermischen Isolators angeordnet sind. Beispielsweise kann es sich bei dem thermischen Isolator um eine Strahlung abschirmende Folie oder um eine andere Spiegelfläche handeln.

Es ist darüber hinaus möglich, dass der thermische Isolator Bereiche aufweist, in denen ein Vakuum erzeugbar ist. In diesem Fall ist es erforderlich, dass die zu kühlende Wicklung und das Kühlrohr vakuumdicht von dem thermischen Isolator getrennt sind. Es ist auch möglich, dass in dem gesamten thermischen Isolator ein Vakuum herrscht.

Um die in dem thermischen Isolator durch das von den Maschinenspulen hervorgerufene Wechselfeld erzeugten Wirbelströme zu verringern, ist vorgesehen, dass der thermische Isolator aus einem Material besteht, das einen hohen elektrischen Widerstand aufweist. Beispielsweise kann der thermische Isolator aus einem Kunststoff mit entsprechend hohem elektrischen Widerstand bestehen.

Bei einer besonders vorteilhaften Ausgestaltung ist vorgesehen, dass das Kühlrohr mit einem kryogenen Fluid befüllbar ist. Bei dem kryogenen Fluid kann es sich um eine kryogene Flüssigkeit oder um gekühltes Gas handeln. Als kryogene Flüssigkeit kommen beispielsweise flüssiger Stickstoff, flüssiges Neon, flüssiger Wasserstoff oder flüssiges Helium in Frage.

Es ist weiter vorgesehen, dass die Kühleinrichtung einen Kryokühler aufweist. Bei dem Kryokühler handelt es sich um einen geeigneten Wärmetauscher, der von dem Kryofluid aufgenommene Wärme abführt. In diesem Fall stellen die Komponenten der Kühleinrichtung zweckmäßigerweise einen geschlossenen Kreislauf dar, der von entsprechenden zwischen dem Kryokühler und den Kühlrohren angeordnete Schlauch- oder Rohrverbindungen gebildet wird. Zur Umwälzung des Kryofluids innerhalb des geschlossenen Kühlkreislaufs kann eine entsprechende Kühlmittelpumpe vorgesehen sein.

Es ist aber auch möglich, die Kühleinrichtung in einem offenen Kühlkreislauf zu betreiben.

Vorteilhafterweise ist vorgesehen, dass die Kühleinrichtung eine Regeleinrichtung aufweist, die dazu geeignet ist, eine Kühlleistung an eine Maschinenlast adaptiv anzupassen. Auf diese Weise können beispielsweise auch kurzfristig auftretende höhere Maschinenlasten von der elektrischen Maschine aufgenommen werden, ohne dass die Temperatur der Wicklungen die Sprungtemperatur erreicht und die Wicklungen die supraleitende Eigenschaft verlieren. Die Regeleinrichtung kann beispielsweise ein in dem Kühlkreislauf angeordnetes Regelventil, einen Temperatursensor im Rücklauf des Kühlkreislaufs und eine digital-elektronische Berechnungseinrichtung aufweisen, wobei die Regeleinrichtung an eine Regelung der gemessenen Rücklauftemperatur mit dem Regelventil angepasst ist.

Bei einer besonders vorteilhaften Ausgestaltung ist vorgesehen, dass die elektrische Maschine eine steuerbare oder regelbare Versorgungseinrichtung zur Steuerung oder Regelung einer Maschinendrehzahl aufweist. Bei der steuerbaren oder regelbaren Versorgungseinrichtung kann es sich beispielsweise um einen Frequenzumrichter handeln.

Weitere vorteilhafte Ausgestaltungen des Erfindungsgedankens werden in der Zeichnung anhand von exemplarischen Ausführungsbeispielen erläutert. Es zeigt:
Figur 1 eine schematische Darstellung einer elektrischen Maschine mit mehreren supraleitenden Wicklungen,
Figur 2 eine schematisch dargestellte Ansicht einer durch ein Kühlrohr gekühlte Wicklung, wobei das Kühlrohr erfindungsgemäß um die Wicklung geschlungen ist

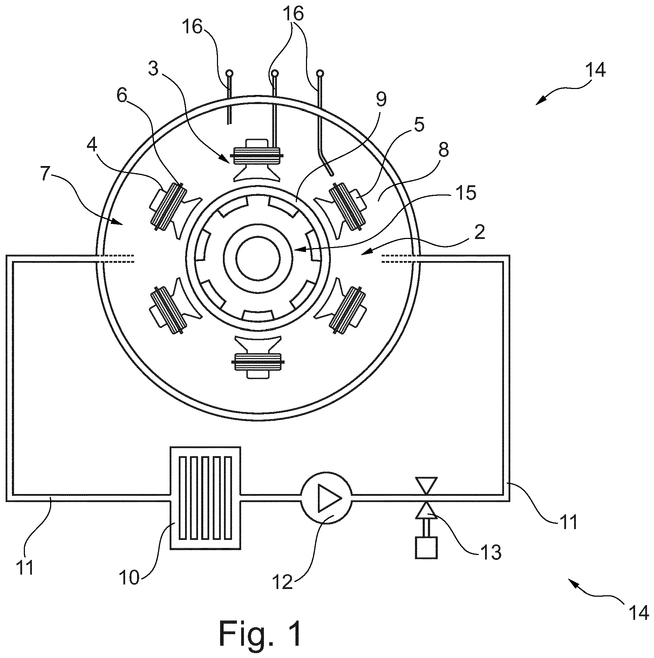

Figur 1 zeigt eine schematische Darstellung einer elektrischen Maschine 1 mit einem Stator 2, an dem mehrere Maschinenspulen 3 angeordnet sind. Wicklungen 4 der Maschinenspulen 3 bestehen aus einem supraleitenden Material. Die Maschinenspulen 3 weisen Spulenkerne 5.

An den Wicklungen 4 liegen jeweils Kühlrohre 6 an.

Der Stator 2 ist innerhalb eines thermischen Isolators 7 angeordnet, der von zwei zylindrischen und koaxial zueinander angeordneten Vakuumröhren 8, 9 und nicht dargestellten Vakuumröhrendeckeln gebildet ist.

In der Zeichnung ist zur Veranschaulichung jeweils nur eine Maschinenspule 3, eine Wicklung 4, ein Spulenkern 5 und ein Kühlrohr 6 mit einem zugeordneten Bezugszeichen versehen.

Die Kühlrohr 6 sind mit einem Kryokühler 10 über Rohrleitungen 11 verbunden, wobei Zuleitungen von den Rohrleitungen 11 zu den Kühlrohren 6 nicht dargestellt sind und durch den gestrichelt dargestellten Verlauf angedeutet werden. Ein kryogenes Fluid wird innerhalb dieses von den Kühlrohren 6, dem Kryokühler 10, den Rohrleitungen 11, einer Kühlmittelpumpe 12 und einer Regeleinrichtung 13 gebildeten Kühlkreislauf mit Hilfe der Kühlmittelpumpe 12 innerhalb des Kühlkreislaufs umgewälzt. Mit der Regeleinrichtung 13 wird die Kühlmitteldurchflussmenge gesteuert. Der Kryokühler 10, die Kühlmittelpumpe 12, die Rohrleitungen 11 einschließlich der nicht dargestellten Zuleitungen, die Kühlrohre 6 und die Regeleinrichtung 13 bilden eine Kühleinrichtung 14.

Im Inneren der elektrischen Maschine 1 befindet sich ein Rotor 15. Die Wicklungen 4 der Maschinenspulen 3 werden über elektrische Anschlüsse 16 über einen nicht dargestellten Frequenzumrichter mit einem Drehstrom versorgt.

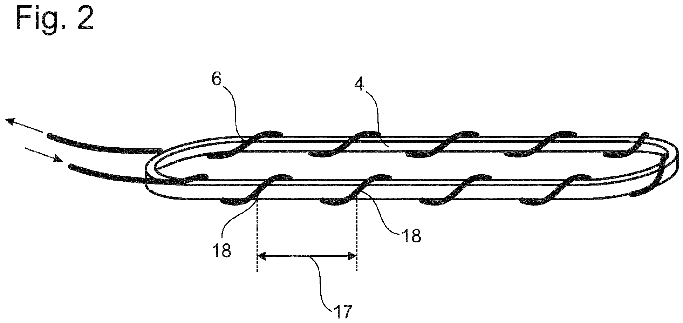

In Figur 2 ist schematisch eine Wicklung 4 dargestellt, an der erfindungsgemäß ein Kühlrohr 6 quer zu einer Wicklungsrichtung der Wicklung 4 um die Wicklung 4 herum geschlungen angeordnet ist. Ein Abstand 17 benachbarter Schlingenabschnitte 18 des Kühlrohrs 6 ist deutlich größer als ein Außendurchmesser 19 des Kühlrohrs 6. Durch diese Anordnung des Kühlrohrs 6 kann eine besonders gleichmäßige Kühlung der Wicklung 4 erreicht werden, wobei gleichzeitig lediglich geringe Wirbelstromverluste in dem Kühlrohr 6 auftreten. In der Zeichnung sind exemplarisch jeweils ein Abstand 17 und zwei Schlingenabschnitte 18 mit einem Bezugszeichen gekennzeichnet.

Das in der Figur 2 dargestellte Kühlrohr 6 ist aus einem metallischen Werkstoff hergestellt.

## Patentansprüche

1. Elektrische Maschine (1) mit einem Stator (2), mit einem Rotor (15) und mit mehreren Maschinenspulen (3), wobei die elektrische Maschine (1) eine Kühleinrichtung (14) aufweist, die dazu geeignet ist, ein supraleitendes Material mindestens bis unter eine Sprungtemperatur abzukühlen, wobei eine Wicklung (4) mindestens einer Maschinenspule (3) aus dem supraleitenden Material besteht und wobei die Wicklung (4) mit der Kühleinrichtung (14) in Wirkverbindung steht, wobei die Kühleinrichtung (14) ein Kühlrohr (6) aufweist, wobei das Kühlrohr (6) mindestens abschnittsweise an der Wicklung (4) anliegt und wobei die zu kühlende Wicklung (4) und das Kühlrohr (6) innerhalb eines thermischen Isolators (7) angeordnet sind, **dadurch gekennzeichnet, dass** das Kühlrohr (6) quer zu einer Wicklungsrichtung der Wicklung (4) um die Wicklung (4) herum geschlungen angeordnet ist und der Abstand (17) benachbarter Schlingenabschnitte (18) des Kühlrohrs (6) deutlich größer ist als ein Außendurchmesser (19) des Kühlrohrs (6).

2. Elektrische Maschine (1) gemäß Anspruch 1, **dadurch gekennzeichnet, dass** das Kühlrohr (6) aus einem metallischen Werkstoff hergestellt ist.

3. Elektrische Maschine (1) gemäß Anspruch 1 oder Anspruch 2, **dadurch gekennzeichnet, dass** das Kühlrohr (6) einen Außendurchmesser zwischen 0,3mm und 1,5mm aufweist.

4. Elektrische Maschine (1) gemäß einem der voranstehenden Ansprüche, **dadurch gekennzeichnet, dass** das Kühlrohr (6) zwei Kühlmittelanschlüsse aufweist.

5. Elektrische Maschine (1) gemäß einem der voranstehenden Ansprüche, **dadurch gekennzeichnet, dass** der thermischen Isolator (7) Bereiche aufweist, in denen ein Vakuum erzeugbar ist.

6. Elektrische Maschine (1) gemäß einem der voranstehenden Ansprüche, **dadurch gekennzeichnet, dass** der thermische Isolator (7) aus einem Material besteht, das einen hohen elektrischen Widerstand aufweist.

7. Elektrische Maschine (1) gemäß einem der voranstehenden Ansprüche, **dadurch gekennzeichnet, dass** das Kühlrohr (17) mit einem kryogenen Fluid befüllbar ist.

8. Elektrische Maschine (1) gemäß einem der voranstehenden Ansprüche, **dadurch gekennzeichnet, dass** die Kühleinrichtung (14) einen Kryokühler (10) aufweist oder in einem offenen Kühlkreis von einem flüssigen oder gasförmigen Kältemittel durchströmt wird.

9. Elektrische Maschine (1) gemäß einem der voranstehenden Ansprüche, **dadurch gekennzeichnet, dass** die Kühleinrichtung (14) eine Regeleinrichtung (13) aufweist, die dazu geeignet ist, eine Kühlleistung an eine Maschinenlast adaptiv anzupassen.

10. Elektrische Maschine (1) gemäß einem der voranstehenden Ansprüche, **dadurch gekennzeichnet, dass** die elektrische Maschine (1) eine steuerbare oder regelbare Versorgungseinrichtung zur Steuerung oder Regelung einer Maschinendrehzahl aufweist.

## Claims

1. Electrical machine (1) with a stator (2), with a rotor (15) and with several machine coils (3), wherein the electrical machine (1) comprises a cooling device (14), which is suitable for cooling a superconducting material at least to below a transition temperature, wherein a winding (4) of at least one machine coil (3) consists of the superconducting material and wherein the winding (4) is operatively connected to the cooling device (14), wherein the cooling device (14) comprises a cooling tube (6), wherein the cooling tube (6) rests at least in sections on the winding (4) and wherein the winding (4) to be cooled and the cooling tube (6) are arranged inside a thermal insulator (7), **characterised in that** the cooling tube (6) is arranged looped around the winding (4) transversely to a winding direction of the winding (4) and the spacing (17) of adjacent loop sections (18) of the cooling tube (6) is significantly greater than an outer diameter (19) of the cooling tube (6).

2. Electrical machine (1) according to claim 1, **characterised in that** the cooling tube (6) is produced from a metal material.

3. Electrical machine (1) according to claim 1 or claim 2, **characterised in that** the cooling tube (6) has an outer diameter of between 0.3 mm and 1.5 mm.

4. Electrical machine (1) according to one of the previous claims, **characterised in that** the cooling tube (6) has two coolant connections.

5. Electrical machine (1) according to any one of the previous claims, **characterised in that** the thermal insulator (7) has areas in which a vacuum can be generated.

6. Electrical machine (1) according to any one of the previous claims, **characterised in that** the thermal insulator (7) consists of a material that has a high electrical resistance.

7. Electrical machine (1) according to any one of the previous claims, **characterised in that** the cooling tube (17) can be filled with a cryogenic fluid.

8. Electrical machine (1) according to any one of the previous claims, **characterised in that** the cooling device (14) has a cryocooler (10) or a liquid or gaseous coolant flows through it in an open cooling circuit.

9. Electrical machine (1) according to any one of the previous claims, **characterised in that** the cooling device (14) has a control device (13), which is suitable for adjusting a cooling output adaptively to a machine load.

10. Electrical machine (1) according to any one of the previous claims, **characterised in that** the electrical machine (1) has a supply device that can be under open- or closed-loop control for open- or closed-loop control of a machine speed.

## Revendications

1. Machine électrique (1) avec un stator (2), avec un rotor (15) et avec plusieurs bobines de machine (3), la machine électrique (1) présentant un dispositif de refroidissement (14) qui est approprié pour refroidir un matériau supraconducteur au moins jusqu'en dessous d'une température de transition, un enroulement (4) d'au moins une bobine de machine (3) étant constitué du matériau supraconducteur et l'enroulement (4) étant en liaison active avec le dispositif de refroidissement (14), le dispositif de refroidissement (14) présentant un tube de refroidissement (6), le tube de refroidissement (6) s'appliquant au moins par sections sur l'enroulement (4), et l'enroulement (4) à refroidir et le tube de refroidissement (6) étant agencés à l'intérieur d'un isolateur thermique (7), **caractérisée en ce que** le tube de refroidissement (6) est agencé en boucle autour de l'enroulement (4) transversalement à une direction d'enroulement de l'enroulement (4), et la distance (17) entre des sections de boucle (18) voisines du tube de refroidissement (6) est nettement supérieure à un diamètre extérieur (19) du tube de refroidissement (6).

2. Machine électrique (1) selon la revendication 1, **caractérisée en ce que** le tube de refroidissement (6) est fabriqué en un matériau métallique.

3. Machine électrique (1) selon la revendication 1 ou la revendication 2, **caractérisée en ce que** le tube de refroidissement (6) présente un diamètre extérieur compris entre 0,3 mm et 1,5 mm.

4. Machine électrique (1) selon l'une quelconque des revendications précédentes, **caractérisée en ce que** le tube de refroidissement (6) présente deux raccords pour agent de refroidissement.

5. Machine électrique (1) selon l'une quelconque des revendications précédentes, **caractérisée en ce que** l'isolateur thermique (7) présente des zones dans lesquelles un vide peut être généré.

6. Machine électrique (1) selon l'une quelconque des revendications précédentes, **caractérisée en ce que** l'isolant thermique (7) est constitué d'un matériau présentant une résistance électrique élevée.

7. Machine électrique (1) selon l'une quelconque des revendications précédentes, **caractérisée en ce que** le tube de refroidissement (17) peut être rempli d'un fluide cryogénique.

8. Machine électrique (1) selon l'une quelconque des revendications précédentes, **caractérisée en ce que** le dispositif de refroidissement (14) présente un refroidisseur cryogénique (10) ou est traversé par un réfrigérant liquide ou gazeux dans un circuit de refroidissement ouvert.

9. Machine électrique (1) selon l'une quelconque des revendications précédentes, **caractérisée en ce que** le dispositif de refroidissement (14) présente un dispositif de régulation (13) approprié pour adapter de manière adaptative une puissance de refroidissement à une charge de la machine.

10. Machine électrique (1) selon l'une quelconque des revendications précédentes, **caractérisée en ce que** la machine électrique (1) présente un dispositif d'alimentation commandable ou réglable pour commander ou réguler une vitesse de rotation de la machine.
